# FASCICULE DE BREVET EUROPEEN

(11) **EP 1 034 698 B1**
(45) Date de publication et mention de la délivrance du brevet: **03.09.2003**
(21) Numéro de dépôt: 00400444.6
(22) Date de dépôt: 18.02.2000
(51) Int. Cl.: A01J 25/06

(54) **Outil et procédé pour trancher longitudinalement une masse de caillé contenue dans un réceptacle**
Gerät und Verfahren zum Längsschneiden einer Käsegerinnungsmasse in einem Behälter
Tool and method for longitudinally cutting of a mass of curd in a basin

(30) Priorité: 05.03.1999 FR 9902782
(43) Date de publication de la demande: 13.09.2000
(73) Titulaire: SOCIETE D'ETUDE, REALISATION ET VENTE A L'INDUSTRIE, SERVI S.A., 37130 Langeais (FR)
(72) Inventeur: Helaine, Cristian, 37130 Cinq mars la Pile (FR)
(74) Mandataire: Lemoine, Robert

(56) Documents cités:
- FR-A- 2 766 329

## Description

La présente invention concerne un outil pour trancher longitudinalement une masse de caillé contenue dans un réceptacle comportant un fond, deux parois longitudinales s'éloignant l'une de l'autre à partir du fond, et une entrée située entre les bords supérieurs des parois longitudinales, du type comprenant un support allongé et des lames de tranchage équidistantes et parallèles entre elles, fixées par l'une de leurs extrémités sur le support et délimitant une zone de tranchage dont le profil externe correspond au profil transversal interne du réceptacle.

Le tranchage du caillé utilisé pour la fabrication de fromages est actuellement réalisé, comme par exemple dans FR-A-2 766 329, à l'aide d'outils comportant des lames rectilignes.

Or, lorsque ces lames ont une longueur importante, elles ont tendance à fléchir facilement et à trancher le caillé en éléments très irréguliers, ce qui peut affecter grandement la qualité des fromages produits à partir du caillé ainsi tranché.

Pour éviter le fléchissement des lames, certains constructeurs ont proposé de les relier entre elles à l'aide de fils transversaux.

Ces fils ont toutefois l'inconvénient d'augmenter la formation de fines qui sont systématiquement éliminées avec le sérum et de réduire ainsi le rendement de production.

La présente invention se propose plus particulièrement de remédier aux inconvénients susmentionnés et, pour ce faire, elle a pour objet un outil pour trancher longitudinalement une masse de caillé contenue dans un réceptacle ayant la structure décrite ci-dessus, cet outil étant du type indiqué et étant caractérisé en ce que les lames de tranchage sont en forme d'arc de cercle, leurs rayons de courbure respectifs étant définis pour qu'elles s'étendent parallèlement ou pratiquement parallèlement à l'une des parois longitudinales du réceptacle lorsque l'outil est en position de tranchage dans ce dernier.

Grâce à leur forme arquée, les lames de l'outil conforme à l'invention sont nettement moins flexibles que les lames rectilignes des outils actuels. Elles peuvent donc trancher le caillé en éléments réguliers sans être reliées entre elles par des fils transversaux, ce qui réduit la formation des fines et évite qu'une quantité importante de caillé soit éliminée avec le sérum.

Etant donné par ailleurs que les lames sont parallèles ou pratiquement parallèles à l'une des parois longitudinales du réceptacle lorsque l'outil est en position d'utilisation dans ce dernier, le tranchage peut être réalisé uniformément dans toute la masse du caillé, ce qui permet la production de fromages de qualité.

L'outil conforme à l'invention est normalement conçu pour trancher du caillé contenu dans un réceptacle dont les parois longitudinales sont courbes. Il peut toutefois être utilisé pour trancher du caillé contenu dans un réceptacle à parois longitudinales planes à condition de réaliser ses lames avec de grands rayons de courbure.

Selon un mode de réalisation particulier de l'invention, la lame extrême qui est destinée à s'étendre parallèlement ou pratiquement parallèlement à l'une des parois longitudinales du réceptacle a une longueur définie pour que son extrémité libre s'étende jusqu'au voisinage du fond du réceptacle lorsque l'outil est en position de tranchage dans ce dernier.

Selon une variante, cette lame pourrait avoir une longueur définie pour que son extrémité libre s'étende au voisinage immédiat de ladite paroi longitudinale, à distance du fond du réceptacle, lorsque l'outil est en position de tranchage.

Avantageusement, les lames de chaque paire de lames successives sont décalées l'une par rapport à l'autre, leur décalage étant réalisé parallèlement au sens du tranchage à effectuer.

Le caillé peut ainsi être soumis à une compression moindre entre les lames, ce qui facilite son tranchage.

Afin de faciliter le tranchage du caillé, il est par ailleurs souhaitable que les lames aient un tranchant incliné par rapport à la verticale.

La présente invention concerne également un procédé pour trancher longitudinalement une masse de caillé contenue dans un réceptacle ayant la structure décrite ci-dessus, à l'aide d'un outil du type comprenant un support allongé et des lames de tranchage équidistantes et parallèles entre elles, fixées par l'une de leurs extrémités sur le support et délimitant une zone de tranchage dont le profil externe correspond au profil transversal interne du réceptacle.

Ce procédé, qui consiste successivement à introduire les lames de l'outil dans le réceptacle, perpendiculairement à l'axe longitudinal de celui-ci, à soumettre l'outil et le réceptacle à un déplacement relatif dans le sens longitudinal de ce dernier, et à extraire les lames de l'outil hors du réceptacle, est caractérisé en ce que sa mise en oeuvre est assurée avec un outil conforme à l'invention et en ce que l'introduction et l'extraction des lames sont effectuées en faisant pivoter l'outil sur un axe parallèle au bord supérieur de l'autre paroi longitudinale du réceptacle, cet axe étant le centre des rayons de courbure respectifs des lames et étant situé du côté de l'extrémité du support qui est la plus éloignée de la lame extrême destinée à s'étendre parallèlement ou pratiquement parallèlement à l'une des deux parois longitudinales.

Pour introduire les lames dans le réceptacle et les extraire hors de celui-ci, le procédé conforme à l'invention propose donc de faire pivoter l'outil plutôt que de le déplacer en translation, comme c'est le cas dans les procédés de tranchage mis en oeuvre actuellement.

Or, les mécanismes nécessaires à la réalisation d'un mouvement de pivotement sont plus simples et moins coûteux que ceux qui sont prévus pour réaliser un déplacement en translation.

Ils ont en outre l'avantage d'être plus faciles à nettoyer, ce qui est primordial pour l'industrie laitière.

Il convient encore de noter que les vibrations engendrées lors d'un mouvement de pivotement sont généralement plus faibles que celles engendrées lors d'un déplacement en translation.

Selon un mode de mise en oeuvre préféré du procédé conforme à l'invention, l'axe de pivotement s'étend latéralement par rapport au réceptacle et à une hauteur supérieure à celle de l'entrée de ce dernier.

Selon ce mode de mise en oeuvre, le support de l'outil peut être constitué par un bras coudé comportant une première branche articulée sur l'axe de pivotement et une seconde branche portant les lames, la seconde branche s'étendant horizontalement lorsque l'outil est en position de tranchage dans le réceptacle.

Pour faciliter le tranchage du caillé, il est préférable de faire pivoter alternativement et en continu l'outil pendant le déplacement relatif de celui-ci et du réceptacle.

Plusieurs modes d'exécution de la présente invention seront décrits ci-après à titre d'exemples non limitatifs en référence aux dessins annexés dans lesquels :
- la figure 1 est une vue en perspective montrant une cuve contenant du caillé et un outil de tranchage conforme à l'invention, l'outil étant représenté au-dessus de la cuve, dans une position parallèle et adjacente à l'une des parois transversales de celle-ci,
- la figure 2 est une vue analogue à celle de la figure 1, mais montrant l'outil en position de tranchage contre la paroi transversale précitée de la cuve,
- la figure 3 est une vue analogue à celle de la figure 2, mais montrant l'outil en position de tranchage contre l'autre paroi transversale de la cuve ;
- la figure 4 est une vue analogue à celle de la figure 1, mais représentant l'outil au-dessus de la cuve, dans une position parallèle et adjacente à l'autre paroi transversale de celle-ci ;
- les figures 5 à 8 sont des vues respectivement analogues aux figures 4 à 1, mais sur lesquelles un outil analogue à l'outil utilisé précédemment est situé de l'autre côté de la cuve ;
- les figures 9 à 12 sont des vues en coupe transversale d'autres cuves ;
- la figure 13 est une vue en bout représentant un outil conforme à l'invention dans deux positions différentes, à savoir une position d'attente et une position de nettoyage ou de stockage ; et
- la figure 14 est une vue schématique en perspective et partiellement arrachée d'un outil conforme à l'invention.

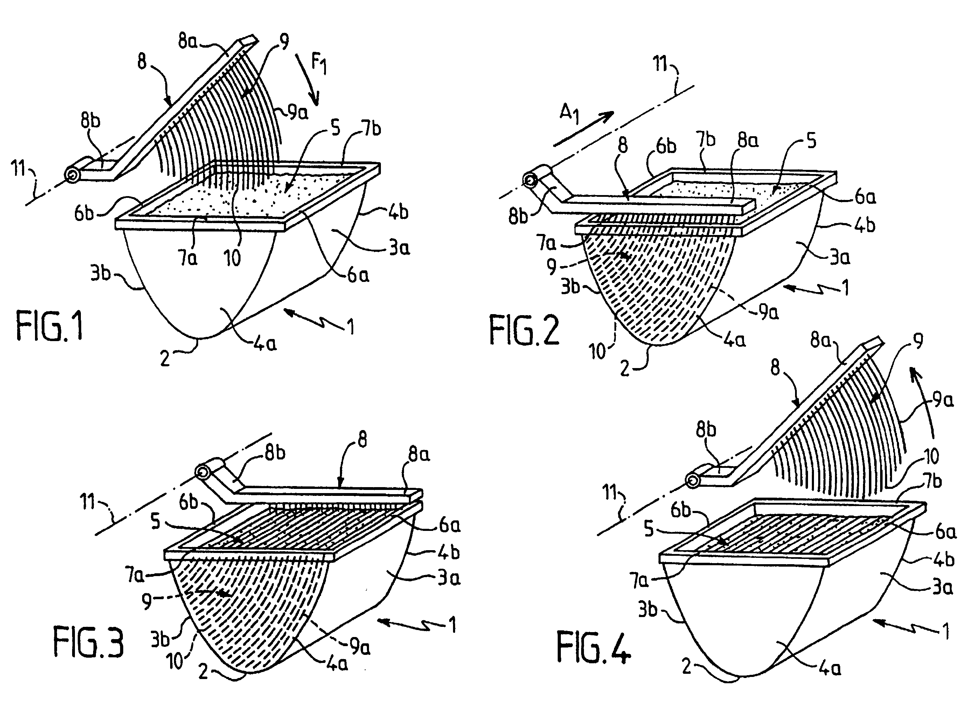

L'outil représenté sur les figures 1 à 4 a été mis au point pour trancher longitudinalement une masse de caillé contenue dans une cuve semi-elliptique 1 comportant un fond étroit 2, deux parois longitudinales courbes 3a, 3b s'éloignant l'une de l'autre à partir du fond 2, deux parois transversales planes 4a, 4b et une entrée horizontale 5 délimitée par les bords supérieurs 6a, 6b des parois longitudinales 3a, 3b et les bords supérieurs 7a, 7b des parois transversales 4a, 4b.

L'outil utilisé pour réaliser le tranchage du caillé comprend un support allongé 8 et des lames de tranchage 9 fixées sur la face inférieure du support 8.

Les lames 9, qui sont parallèles et équidistantes entre-elles, délimitent une zone de tranchage dont le profil externe 10 correspond au profil transversal interne la cuve.

Ces lames sont en forme d'arc de cercle, leurs rayons de courbure respectifs étant définis pour qu'elles s'étendent parallèlement ou pratiquement parallèlement à la paroi longitudinale 3a lorsque l'outil est dans ses positions d'utilisation représentées sur les figures 2 et 3.

On remarquera que le support allongé 8 est constitué par un bras coudé dont la branche 8a porte les lames 9 et dont la branche 8b, plus courte, est articulée sur un axe 11 parallèle aux bords supérieurs 6a, 6b des parois longitudinales 3a, 3b de la cuve.

L'axe 11 s'étend latéralement par rapport à la cuve, à une hauteur supérieure à celle de l'entrée 5 de cette dernière, et constitue le centre de courbure des lames 9.

On notera par ailleurs que la branche 8a du support 8 est horizontale lorsque l'outil est en position de tranchage, comme représenté sur les figures 2 et 3.

On va maintenant décrire comment l'outil conforme à l'invention peut être utilisé pour trancher longitudinalement le caillé contenu dans la cuve 1.

Tout d'abord, on place l'outil au-dessus de l'entrée 5 de la cuve, dans un plan parallèle et adjacent au plan de la paroi transversale 4a de celle-ci, comme représenté sur la figure 1.

On fait ensuite pivoter l'outil autour de l'axe 11 dans le sens de la flèche F1 représentée sur la figure 1, jusqu'à ce que les extrémités libres des lames 9 viennent au voisinage immédiat de la surface interne de la cuve, comme représenté sur la figure 2.

Sur cette figure, on notera que la lame extrême 9a la plus éloignée de l'axe de pivotement 11 est adjacente à la paroi longitudinale 3a et s'étend sensiblement parallèlement à cette dernière.

L'outil étant en position de tranchage, on le déplace dans le sens de la flèche A1 représenté sur la figure 2, parallèlement à l'axe longitudinal de la cuve, jusqu'à ce qu'il vienne contre la paroi transversale 4b de celle-ci, comme représenté sur la figure 3.

Pendant ce temps, les lames 9 tranchent le caillé en couches superposées de forme arquée et de même épaisseur.

Il va de soi que l'on pourrait réaliser ces couches en déplaçant la cuve dans le sens inverse de la flèche A1 tout en maintenant l'outil immobile.

Afin de faciliter le tranchage, il peut être avantageux de faire osciller en continu l'outil autour de l'axe de pivotement 11 pendant son déplacement ou celui de la cuve.

On fait maintenant pivoter l'outil autour de l'axe 11 dans le sens inverse de la flèche F1 pour l'amener au dessus de l'entrée 5 de la cuve, dans un plan parallèle et adjacent au plan de la paroi transversale 4b, comme représenté sur la figure 4.

L'opération de tranchage qui a permis de réaliser les couches de caillé superposées doit en réalité être suivie d'une opération de tranchage longitudinal supplémentaire que l'on va décrire ci-après.

Cette nouvelle opération de tranchage peut être réalisée avec un outil similaire à celui utilisé pour effectuer le tranchage en couches, ce second outil étant monté pivotant autour d'un axe 11A symétrique de l'axe 11 par rapport au plan longitudinal médian de la cuve.

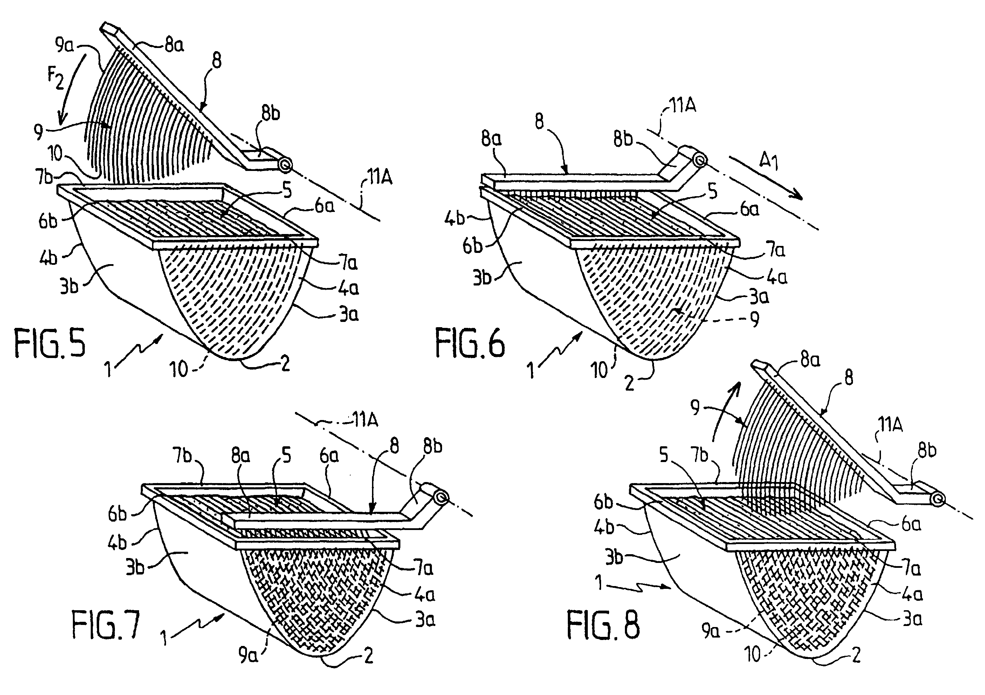

On place tout d'abord le second outil au-dessus de l'entrée 5 de la cuve, dans un plan parallèle et adjacent au plan de la paroi transversale 4b de celle-ci, comme représenté sur la figure 5.

On fait ensuite pivoter le second outil autour de l'axe 11A dans le sens de la flèche F2 représentée sur la figure 5 jusqu'à ce que les extrémités libres de ses lames 9 viennent au voisinage immédiat de la surface interne de la cuve, comme représenté sur la figure 6.

On notera ici que la lame externe 9a la plus éloignée de l'axe de pivotement 11A est adjacente à la paroi longitudinale 3b et s'étend sensiblement parallèlement à cette dernière.

On déplace ensuite le second outil dans le sens de la flèche A1 représentée sur la figure 6, parallèlement à l'axe longitudinal de la cuve, jusqu'à ce qu'il vienne contre la paroi transversale 4a de celle-ci, comme représenté sur la figure 7.

Pendant ce temps, les lames tranchent les couches de caillé superposées en lanières dont la section est approximativement en forme de losange.

Bien entendu, les lanières pourraient être réalisées en déplaçant la cuve dans le sens inverse de la flèche A1 tout en maintenant le second outil immobile.

Là encore, l'outil pourrait être soumis à un mouvement d'oscillation continu pendant son déplacement ou celui de la cuve afin de faciliter le tranchage.

On fait enfin pivoter le second outil autour de l'axe 11A dans le sens inverse de la flèche F2 pour l'amener au dessus de l'entrée 5 de la cuve, comme représenté sur la figure 8.

Il va de soi que l'on pourrait n'utiliser que l'outil monté pivotant sur l'axe 11 ou l'outil monté pivotant sur l'axe 11A. Quel que soit l'outil utilisé, il suffirait en effet de faire pivoter la cuve de 180° avant d'effectuer la seconde opération de tranchage.

Après la réalisation des deux opérations de tranchage longitudinal, il est nécessaire de réaliser un tranchage transversal afin de découper les lanières en petits blocs de forme générale cubique.

Etant donné cependant que le tranchage transversal est une opération classique réalisée à l'aide d'un outil également classique, on s'abstiendra de la décrire ici.

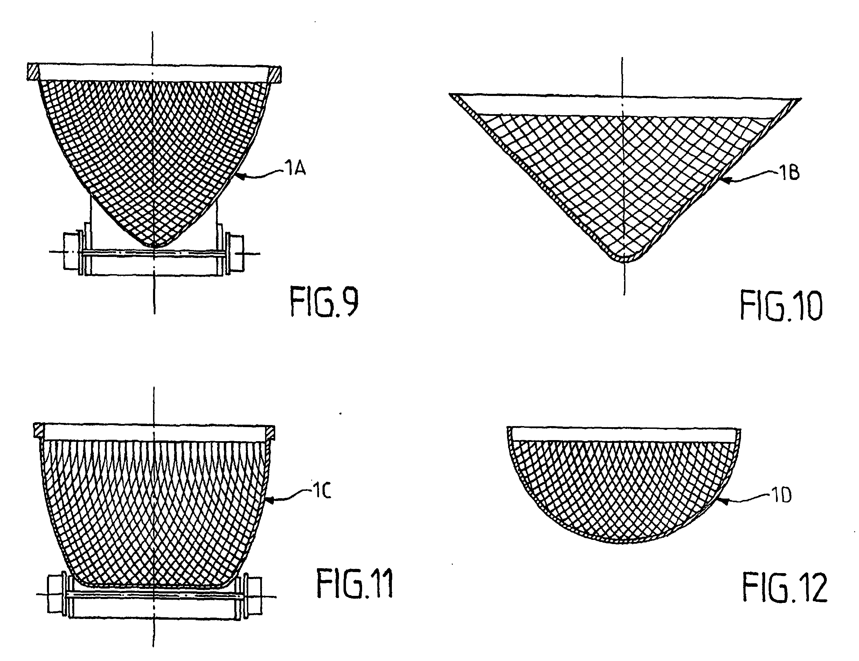

La figure 9 montre en coupe transversale une cuve 1A dont le fond est plus étroit que celui de la cuve 1 et dont les parois longitudinales sont constituées par deux éléments cylindriques, ces éléments étant symétriques par rapport au plan longitudinal médian de la cuve.

On remarquera que la cuve 1A est montée sur un châssis pourvu de roues, ce qui permet de la déplacer facilement dans le sens de sa longueur.

La figure 10 représente une cuve 1B ayant en coupe transversale la forme d'un V et dont les parois longitudinales sont planes.

Des outils conformes à l'invention peuvent être utilisés sans problème pour trancher longitudinalement du caillé contenu dans les cuves représentées sur les figures 9 et 10.

Il suffit en effet que les rayons de courbure de leurs lames soient définis pour que celles-ci s'étendent parallèlement ou pratiquement parallèlement à l'une des parois longitudinales de la cuve concernée et que les centres de courbure respectifs de leurs lames soient situés sur leur axe de pivotement.

Bien entendu, le rayon de courbure des lames de l'outil utilisé pour trancher le caillé contenu dans la cuve 1B visible sur la figure 10 doit être nettement plus grand que celui des lames de l'outil utilisé pour trancher le caillé contenu dans la cuve 1A visible sur la figure 9.

En examinant les figure 9 et 10, on remarquera que lors des opérations de tranchage, les lames extrêmes qui sont destinées à s'étendre parallèlement ou pratiquement parallèlement à l'une des parois longitudinales des cuves représentées se prolongent jusqu'au voisinage immédiat du fond de ces dernières.

On remarquera également que les extrémités libres des autres lames sont adjacentes à l'autre paroi longitudinale des cuves.

La figure 11 représente en coupe transversale une cuve 1C comportant deux parois longitudinales courbes reliées l'une à l'autre par un fond plat horizontal.

Un outil conforme à l'invention peut encore être utilisé pour trancher longitudinalement le caillé contenu dans cette cuve.

Il convient en effet que les rayons de courbure de ses lames soient définis pour que celles-ci s'étendent parallèlement ou pratiquement parallèlement à l'une des deux parois longitudinales de la cuve 1C et que les centres de courbure respectifs de ses lames soient situés sur son axe de pivotement.

Lorsque l'outil est en position de tranchage dans la cuve représentée sur la figure 11, sa lame extrême qui est parallèle ou pratiquement parallèle à l'une des parois longitudinales de cette cuve se prolonge jusqu'au voisinage immédiat du fond de cette dernière.

Quant à ses autres lames, elles ont une longueur telle que leurs extrémité libres s'avancent jusqu'au voisinage immédiat respectivement du fond et de l'autre paroi longitudinale de la cuve.

On précisera encore que les centres de courbure respectifs des lames de l'outil utilisé en relation avec la cuve 1C visible sur la figure 11 sont situés sur l'axe de pivotement de cet outil.

La figure 12 représente en coupe transversale une cuve 1D de forme semi-cylindrique.

Un outil conforme à l'invention peut encore être utilisé sans problème pour trancher longitudinalement le caillé contenu dans cette cuve.

Il convient dans ce cas que les rayons de courbure de ses lames soient définis pour que celles-ci s'étendent parallèlement ou pratiquement parallèlement à l'une des parois longitudinales de la cuve semi-cylindrique 1D et que son axe de pivotement soit le centre de courbure de ses lames.

En examinant la figure 12, on remarquera que lors du tranchage, la lame extrême qui est destinée à s'étendre parallèlement ou pratiquement parallèlement à l'une des parois longitudinales de la cuve est relativement courte puisque son extrémité libre s'avance jusqu'au voisinage immédiat de ladite paroi longitudinale, approximativement à mi-distance entre le fond et l'entrée de la cuve 1D.

On remarquera également que les extrémités libres des autres lames de l'outil s'avancent jusqu'au voisinage immédiat, respectivement de la paroi longitudinale précitée du fond de la cuve, et de l'autre paroi longitudinale, comme représenté sur la figure 12.

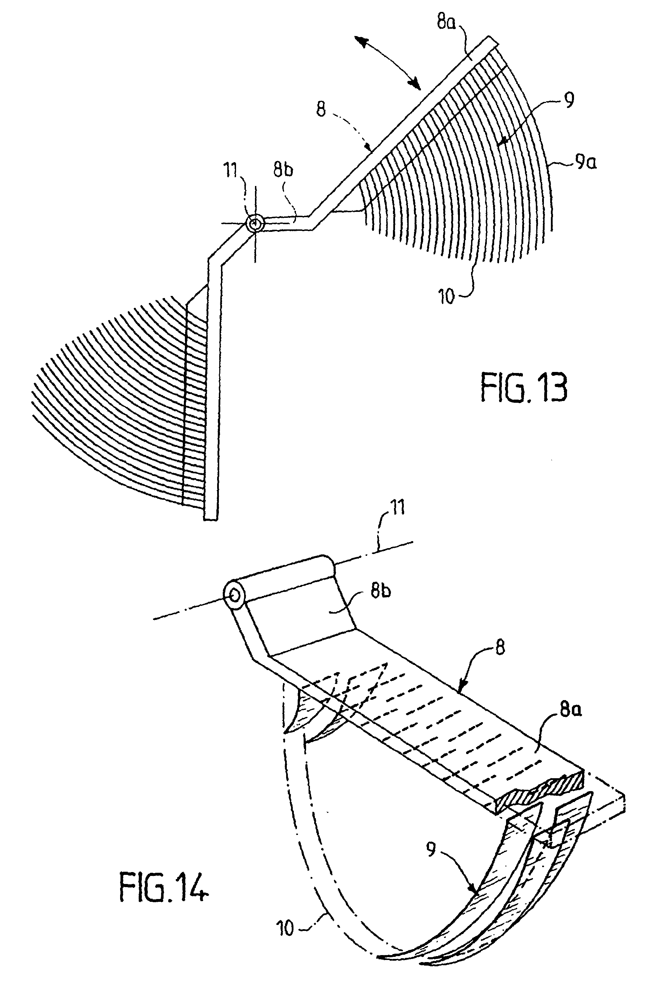

En se référant maintenant à la figure 13, on constate que l'outil représenté, qui est monté pivotant sur l'axe 11, peut être amené à l'extérieur de la cuve, à une certaine distance de celle-ci, dans une position latérale dans laquelle le support allongé 8 est tourné vers le bas.

En fait, cette position est prévue pour permettre le nettoyage et/ou le stockage de l'outil de tranchage, sans risque de contamination de l'intérieur de la cuve située à proximité.

Dans ce qui précède, on a décrit des outils et un procédé pour trancher du caillé contenu dans des cuves diverses. Il va de soi que l'on ne sortirait pas du cadre de la présente invention si l'on tranchait du caillé contenu dans un coagulateur connu en soi, du type comprenant un tapis en forme de gouttière entraîné en continu.

Enfin, on notera que pour faciliter le tranchage du caillé, les lames 9 de l'outil conforme à l'invention peuvent avoir un tranchant incliné par rapport à la verticale ou que les lames de chaque paire de lames successives peuvent être décalées l'une par rapport à l'autre, parallèlement au sens du tranchage, afin d'éviter que le caillé soit soumis à une compression trop importante entre-elles.

A toutes fins utiles, on pourra se reporter à la figure 14 pour voir comment les deux caractéristiques ci-dessus peuvent être prévues sur un outil conforme à l'invention.

## Revendications

1. Outil pour trancher longitudinalement une masse de caillé contenue dans un réceptacle (1, 1A, 1B, 1C, 1D) comportant un fond (2), deux parois longitudinales (3a, 3b) s'éloignant l'une de l'autre à partir du fond, et une entrée (5) située entre les bords supérieurs (6a, 6b) des parois longitudinales, du type comprenant un support allongé (8) et des lames de tranchage (9) équidistantes et parallèles entre-elles, fixées par l'une de leurs extrémités sur le support et délimitant une zone de tranchage dont le profil externe (10) correspond au profil transversal interne du réceptacle, **caractérisé en ce que** les lames de tranchage (9) sont en forme d'arc de cercle, leurs rayons de courbure respectifs étant définis pour qu'elles s'étendent parallèlement ou pratiquement parallèlement à l'une des parois longitudinales (3a, 3b) du réceptacle lorsque l'outil est en position de tranchage dans ce dernier.

2. Outil selon la revendication 1, **caractérisé en ce que** la lame extrême (9a) qui est destinée à s'étendre parallèlement ou pratiquement parallèlement à l'une des parois longitudinales (3a, 3b) du réceptacle a une longueur définie pour que son extrémité libre s'étende jusqu'au voisinage du fond (2) du réceptacle lorsque l'outil est en position de tranchage dans ce dernier.

3. Outil selon la revendication 1 ou 2, **caractérisé en ce que** la lame extrême (9a) qui est destinée à s'étendre parallèlement ou pratiquement parallèlement à l'une des parois longitudinales (3a, 3b) du réceptacle a une longueur définie pour que son extrémité libre s'étende au voisinage immédiat de ladite paroi longitudinale, à distance du fond du réceptacle, lorsque l'outil est en position de tranchage.

4. Outil selon l'une quelconque des revendications précédentes, **caractérisé en ce que** les lames (9) de chaque paire de lames successives sont décalées l'une par rapport à l'autre, leur décalage étant réalisé parallèlement au sens du tranchage à effectuer.

5. Outil selon l'une quelconque des revendications précédentes, **caractérisé en ce que** les lames (9) ont un tranchant incliné par rapport à la verticale.

6. Procédé pour trancher longitudinalement une masse de caillé contenue dans un réceptacle (1, 1A, 1B, 1C, 1D) comportant un fond (2), deux parois longitudinales (3a, 3b) s'éloignant l'une de l'autre à partir du fond, et une entrée (5) située entre les bords supérieurs (6a, 6b) des parois longitudinales, à l'aide d'un outil du type comprenant un support allongé (8) et des lames de tranchage (9) équidistantes et parallèles entre elles, fixées par l'une de leurs extrémités sur le support et délimitant une zone de tranchage dont le profil externe (10) correspond au profil transversal interne du réceptacle, consistant successivement à introduire les lames de l'outil dans le réceptacle, perpendiculairement à l'axe longitudinal de celui-ci, à soumettre l'outil et le réceptacle à un déplacement relatif dans le sens longitudinal de ce dernier, et à extraire les lames de l'outil hors du réceptacle, **caractérisé en ce que** sa mise en oeuvre est assurée avec l'outil selon l'une quelconque des revendications 1 à 5 et **en ce que** l'introduction et l'extraction des lames (9) sont effectuées en faisant pivoter l'outil sur un axe (11, 11A) parallèle au bord supérieur de l'autre paroi longitudinale du réceptacle, cet axe étant le centre des rayons de courbure respectifs des lames et étant situé du côté de l'extrémité du support (8) qui est la plus éloignée de la lame extrême (9a) destinée à s'étendre parallèlement ou pratiquement parallèlement à l'une des deux parois longitudinales (3a, 3b).

7. Procédé selon la revendication 6, **caractérisé en ce que** l'axe de pivotement (11, 11A) s'étend latéralement par rapport au réceptacle et à une hauteur supérieure à celle de l'entrée (5) de ce dernier.

8. Procédé selon la revendication 6 ou 7, **caractérisé en ce que** le support (8) de l'outil est constitué par un bras coudé comportant une première branche (8b) articulée sur l'axe de pivotement (11, 11A) et une seconde branche (8a) portant les lames (9).

9. Procédé selon la revendication 8, **caractérisé en ce que** la seconde branche (8a) du bras coudé s'étend horizontalement lorsque l'outil est en position de tranchage dans le réceptacle.

10. Procédé selon l'une quelconque des revendications 6 à 9, **caractérisé en ce qu'**il consiste à faire pivoter alternativement et en continu l'outil pendant le déplacement relatif de celui-ci et du réceptacle.

## Patentansprüche

1. Gerät zum Längsschneiden einer Käsemasse, enthalten in einem Behälter (1, 1A, 1B, 1C, 1D) mit einem Boden (2), zwei sich ab dem Boden voneinander entfernenden Längswänden (3a, 3b) und einem zwischen den beiden oberen Rändern (6a, 6b) der Längswände befindlichen Eingang (5), und von dem Typ, der einen länglichen Träger (8) und Schneidmesser (9) umfasst, die äquidistant und parallel zueinander sind, mit einem ihrer Enden an bzw. in dem Träger befestigt sind und eine Schneidzone abgrenzen, deren Außenprofil (10) dem Innenquerschnittsprofil des Behälters entspricht,
**dadurch gekennzeichnet,**
**dass** die Schneidmesser (9) kreisbogenförmig sind, ihre jeweiligen Krümmungsradien so definiert sind, dass sie sich parallel oder praktisch parallel zu einer der Längswände (3a, 3b) des Behälters erstrecken, wenn das Gerät in diesem letzteren in Schneidposition ist.

2. Gerät nach Anspruch 1, **dadurch gekennzeichnet, dass** das äußerste Messer (9a), das dazu bestimmt ist, sich parallel oder praktisch parallel zu einer der Längswände (3a, 3b) des Behälters zu erstrecken, eine Länge hat, die so definiert ist, dass sein freies Ende sich bis in die Nähe des Bodens (2) des Behälters erstreckt, wenn das Gerät in diesem letzteren in Schneidposition ist.

3. Gerät nach Anspruch 1 oder 2, **dadurch gekennzeichnet, dass** das äußerste Messer (9a), das dazu bestimmt ist, sich parallel oder praktisch parallel zu einer der Längswände (3a, 3b) des Behälters zu erstrecken, eine Länge hat, die so definiert ist, dass sein freies Ende sich in unmittelbarer Nähe der genannten Längswand erstreckt, mit Abstand vom Boden des Behälter, wenn das Gerät in Schneidposition ist.

4. Gerät nach einem der vorangehenden Ansprüche, **dadurch gekennzeichnet, dass** die Messer (9) jedes Paares aufeinanderfolgender Messer gegeneinander versetzt sind, wobei ihre Versetzung parallel ist zu der Schneidrichtung.

5. Gerät nach einem der vorangehenden Ansprüche, **dadurch gekennzeichnet, dass** die Messer (9) eine in Bezug auf die Vertikale geneigte Schneide haben.

6. Verfahren zum Längsschneiden einer Käsemasse, enthalten in einem Behälter (1, 1A, 1B, 1C, 1D) mit einem Boden (2), zwei sich ab dem Boden voneinander entfernenden Längswänden (3a, 3b) und einem zwischen den beiden oberen Rändern (6a, 6b) der Längswände befindlichen Eingang (5), mit Hilfe eines Geräts des Typs, der einen länglichen Träger (8) und Schneidmesser (9) umfasst, die äquidistant und parallel zueinander sind, mit einem ihrer Enden an bzw. in dem Träger befestigt sind und eine Schneidzone abgrenzen, deren Außenprofil (10) dem Innenquerschnittsprofil des Behälters entspricht, darin bestehend, sukzessive die Messer des Geräts in den Behälter hineinzutauchen, senkrecht zu dessen Längsachse, das Gerät und den Behälter einer Relativbewegung in der Längsachse dieses letzteren zu unterziehen, und die Messer des Geräts aus dem Behälter herauszuziehen,
**dadurch gekennzeichnet,**
**dass** seine Anwendung mit dem Gerät nach einem der Ansprüche 1 bis 5 erfolgt, und dadurch, dass das Hineintauchen und Herausziehen der Messer (9) erfolgt, indem man das Gerät um eine Achse (11, 1A) schwenkt, die parallel ist zu dem oberen Rand der anderen Längswand des Behälters, wobei diese Achse der Mittelpunkt der jeweiligen Krümmungsradien der Messer ist und sich auf derjenigen Seite des Endes des Trägers (8) befindet, die am weitesten von dem äußersten Messer (9a) entfernt ist, das dazu bestimmt ist, sich parallel oder praktisch parallel zu einer der beiden Längswände (3a, 3b) zu erstrecken.

7. Verfahren nach Anspruch 6, **dadurch gekennzeichnet, dass** die Schwenkachse (11, 11A) sich in Bezug auf den Behälter seitlich und in einer Höhe erstreckt, die größer ist als die des Eingangs (5) dieses letzteren.

8. Verfahren nach Anspruch 6 oder 7, **dadurch gekennzeichnet, dass** der Träger (8) des Geräts durch einen abgewinkelten Arm gebildet wird, mit einem in der Schwenkachse (11, 11A) angelenkten ersten Zweig (8b) und einem die Messer (9) tragenden zweiten Zweig (8a).

9. Verfahren nach Anspruch 8, **dadurch gekennzeichnet, dass** der zweite Zweig (8a) des abgewinkelten Arms sich horizontal erstreckt, wenn das Gerät in dem Behälter in Schneidposition ist.

10. Verfahren nach einem der Ansprüche 6 bis 9, **dadurch gekennzeichnet, dass** es darin besteht, das Gerät während der Relativbewegung zwischen ihm und dem Behälter kontinuierlich hin- und herzuschwenken bzw. eine kontinuierliche Wechselbewegung ausführen zu lassen.

## Claims

1. Tool for longitudinally slicing a mass of curd contained in a receptacle (1, 1A, 1B, 1C, 1D) comprising a bottom (2), two longitudinal walls (3a, 3b) extending away from one another from the bottom, and an entry (5) located between the upper edges (6a, 6b) of the longitudinal walls, of the type including an elongated support (8) and mutually equidistant and parallel slicing blades (9) fixed by one of their ends to the support and delimiting a slicing zone the outer profile (10) of which corresponds to the inner transverse profile of the receptacle, **characterised in that** the slicing blades (9) are in the shape of an arc of a circle, with their respective radii of curvature being defined so that they extend parallel, or practically parallel, to one of the longitudinal walls (3a, 3b) of the receptacle when the tool is in slicing position in the latter.

2. Tool according to claim 1, **characterised in that** the end blade (9a), which is designed to extend parallel, or practically parallel, to one of the longitudinal walls (3a, 3b) of the recipient has a length defined so that its free end extends into the vicinity of the bottom (2) of the receptacle when the tool is in slicing position in the latter.

3. Tool according to claim 1 or 2, **characterised in that** the end blade (9a), which is designed to extend parallel, or practically parallel, to one of the longitudinal walls (3a, 3b) of the receptacle has a length defined so that its free end extends in the immediate vicinity of said longitudinal wall, at a distance from the bottom of the receptacle, when the tool is in slicing position.

4. Tool according to any one of the preceding claims, **characterised in that** the blades (9) of each pair of successive blades are offset in relation to one another, their offset being produced parallel to the direction of the slicing to be effected.

5. Tool according to any one of the preceding claims, **characterised in that** the blades (9) have a cutting edge that is inclined in relation to the vertical.

6. Process for longitudinally slicing a mass of curd contained in a receptacle (1, 1A, 1B, 1C, 1D) comprising a bottom (2), two longitudinal walls (3a, 3b) extending away from one another from the bottom, and an entry (5) located between the upper edges (6a, 6b) of the longitudinal walls, using a tool of the type including an elongated support (8) and mutually equidistant and parallel slicing blades (9) fixed by one of their ends to the support and delimiting a slicing zone the outer profile (10) of which corresponds to the inner transverse profile of the receptacle, successively consisting in introducing the blades of the tool into the receptacle perpendicularly to the longitudinal axis of the latter, in subjecting the tool and the receptacle to a relative displacement in the longitudinal direction of the latter, and in extracting the blades of the tool from the recipient, **characterised in that** its implementation is effected with the tool according to any one of claims 1 to 5, and **in that** the introduction and the extraction of the blades (9) are carried out by causing the tool to pivot about first pin (11, 11A) parallel to the upper edge of the other longitudinal wall of the recipient, this axis being the centre of the respective radii of curvature of the blades and being located towards the end of the support (8) that is furthest from the end blade (9a) designed to extend parallel, or practically parallel, to one of the two longitudinal walls (3a, 3b).

7. Process according to claim 6, **characterised in that** the pivotal axis (11, 11A) extends laterally in relation to the receptacle and at a height above that of the entry (5) to the latter.

8. Process according to claim 6 or 7, **characterised in that** the support (8) of the tool is constituted by an angled arm comprising a first leg (8b) hinging on the pivot pin (11, 11A) and a second leg (8a) bearing the blades (9).

9. Process according to claim 8, **characterised in that** the second leg (8a) of the angled arm extends horizontally when the tool is in slicing position in the receptacle.

10. Process according to any one of claims 6 to 9, **characterised in that** it consists in causing the tool to pivot alternately and continuously during the relative displacement of the tool and the receptacle.
